# EUROPEAN PATENT APPLICATION

(11) **EP 4 697 300 A1**
(43) Date of publication of application: **18.02.2026**
(21) Application number: 24194294.5
(22) Date of filing: 13.08.2024
(51) Int. Cl.: G08C 17/02, H04Q 9/00, H04W 36/00, H04W 76/00

(54) **WIRELESS TRANSMISSION OF A COMMAND**

(71) Applicant: Kamstrup A/S, 8660 Skanderborg (DK)
(72) Inventor: Hald, Flemming, 8660 Skanderborg (DK); Makussen, Torben, 8660 Skanderborg (DK)
(74) Representative: Plougmann Vingtoft a/s

(57) **Abstract**

A method for controlling wireless transmission of a command from a gateway to a utility meter. The utility meter comprises a wireless communication interface, a processor for executing commands received via the wireless communication interface, a first Command Message Counter, CMC, and a utility meter ID. The gateway comprises a wireless communication interface, a processor for generating data messages comprising commands, a second CMC associated with the utility meter ID of the utility meter and a Command Message Counter Limit, CMCL. The method includes determining in the gateway if the second CMC associated with the utility meter ID of the utility meter has reached the CMCL. If said second CMC has reached the CMCL refrain from transmitting the command to the utility meter. Otherwise generating in the gateway a data message comprising the command, the utility meter ID of the utility meter and a third CMC and transmitting the generated data message from the gateway to the utility meter. The utility meter will allow execution of the command if the value of the third CMC exceeds the value of the first CMC.

## Description

### FIELD OF THE INVENTION

The present invention relates to the field of wireless transmission of commands from a gateway in a meter reading system to a utility meter via a LPWAN. Especially it relates to the field of transmission of link management commands to a utility meter covered by multiple gateways.

### BACKGROUND OF THE INVENTION

Automatic meter reading of utility meters is generally known in the art. Utility companies use meter reading systems to read and monitor utility meters remotely, typically using Radio Frequency (RF) communication for establishing a wireless Low Power Wide Area Network (LPWAN). An LPWAN comprises several end-devices such as utility meters which are within network coverage of several gateways also known as data concentrators or collectors. A wireless LPWAN typically has the topology of a star network which implies direct communication between utility meters and the gateway via a wireless RF link, however, in certain situations repeaters or routers may be used for routing or relaying messages between utility meters and gateways.

The wireless RF link between the utility meters and the gateways may be managed, which means that transmission power, communication channel, level of forward error correct (redundancy), data rate etc. can be adjusted and managed to be adequate for establishing a reliable communication link between the utility meter and the gateway. This is in the following referred to as link management. Additional network services may be managed by a gateway, such network services may include clock synchronization of the utility meter, which may be managed using, at least partly, the same method as for link management.

Typically, a network controller has the responsibility for managing and maintaining the LPWAN. The responsibility for the link management functionality may be delegated from a network controller to a specific gateway, to achieve a more efficient management of the individual wireless links. The gateway may manage the wireless link autonomously when the responsibility for a wireless link or utility meter has been delegated to the gateway. For the LPWAN to operate optimally, only one gateway should be responsible for link management of a given utility meter. In the event of e.g. a gateway losing connection to the network controller, while still in operation, the network controller might want to delegate the responsibility of a specific utility meter to another gateway. This would cause a double assignment of responsibility-the old delegation of responsibility that has not been successfully removed from the old gateway and the newly delegated responsibility of the same utility meter to a new gateway. Such a double delegation is undesired since it would lead to two gateways competing to manage the utility meter. Further, delegation of responsibility from the network controller is most efficiently done in bulk-operation, which means that the network controller will not be able to perform removal of responsibility from one gateway and addition to another gateway in an atomic operation. Consequently, the responsibility to manage a utility meter may be delegated to more than one gateway which will cause conflicts in managing the link.

Especially in an LPWAN using a Listen After Talk (LAT) approach, it is important that only one gateway at a time initiates transmission of commands to the utility meter. This is due to the LAT approach wherein the utility meter, which often is battery operated, will autonomously transmit unsolicited data messages to the gateways and at a well-defined and short time window following such an unsolicited message it will open a reception window by activating its RF receiver for a short period of time, whereafter the receiver remains inactive until the next reception window. If more than one gateway transmits data messages to the utility meter within the same reception window there will be a collision of the data messages and both messages will with a high probability not be received.

Hence, an improved method of managing the transmission of commands, especially link management commands, from a gateway to a utility meter in a wireless LPWAN would be advantageous. In particular, a more robust efficient / reliable method of transmitting link management commands when the responsibility of link management is moved from one gateway to another would be advantageous.

### OBJECT OF THE INVENTION

In particular, it may be seen as an object of the present invention to provide a method and a system for transmission of commands from a gateway to a utility meter in a wireless RF LPWAN that solves the above-mentioned problems of the prior art.

### SUMMARY OF THE INVENTION

Thus, the above described object and several other objects are intended to be obtained in a first aspect of the invention by providing a method for controlling wireless transmission of a command from a gateway to a utility meter, wherein the utility meter comprises: a wireless communication interface; a processor for executing commands received via the wireless communication interface; a first Command Message Counter (CMC) and a utility meter ID, and wherein the gateway comprises: a wireless communication interface; a processor for generating data messages comprising commands; a second CMC associated with the utility meter ID of the utility meter; and a Command Message Counter Limit (CMCL), the method comprises a step of: determining in the gateway if the second CMC associated with the utility meter ID of the utility meter has reached the CMCL, and if said second CMC has reached the CMCL refrain from transmitting the command to the utility meter else if said second CMC has not reached the CMCL perform the steps of: generating in the gateway a data message comprising the command, the utility meter ID of the utility meter and a third CMC, where the third CMC is assigned a value calculated as the value of the second CMC associated with the utility meter ID plus an offset; transmitting the generated data message from the gateway to the utility meter; updating in the gateway the value of the second CMC according to the value of the third CMC; receiving in the utility meter the data message transmitted from the gateway; and comparing in the utility meter the third CMC in the received data message to the first CMC of the utility meter, and if the value of the third CMC exceeds the value of the first CMC allowing execution of the command comprised in the received data message and set the value of the first CMC to be equal to the value of the third CMC, else if the value of the third CMC does not exceed the value of the first CMC refraining from allowing execution of the command comprised in the received data message.

The method according to the first aspect of the invention is especially advantageous in that a limited mandate of managing the utility meter can be delegated to the gateway. This is achieved by the first Command Message Counter (CMC), the check of the third CMC in the utility meter and the Command Message Counter Limit (CMCL) in the gateway, which limits the number of commands that the gateway can sent to the utility meter. Together the first CMC, the second CMC and the CMCL has the effect that a limited mandate of managing the utility meter can be delegated to the gateway. This is effectuated by the difference of / space spanned by the first CMC and the CMCL. The mandate may be delegated to the gateway by a network controller, which transfers a new CMCL and optionally a value for the second CMC to the gateway. The mandate may be a mandate of link management or any other network management, which may be performed autonomously by the gateway, within the limits defined by the first/second CMC and the CMCL. A further advantage is that the mandate may be withdrawn or cancelled from the gateway without direct communication between the gateway and the network controller. This is especially advantageous in case of a loss of connection between the gateway and the network controller. This technical effect stems from the feature in the utility meter of setting the value of the first CMC equal to the third CMC if the value of the third CMC exceeds the first CMC. Consequently, the mandate may be delegated to a new gateway by transferring to the new gateway a CMC and/or a CMCL which exceeds those of the gateway currently having the mandate. When the new gateway uses the exceeding values for the third CMC and transmits a data message to the utility meter, the first CMC will be updated in the utility meter and the first gateway will no longer have a mandate for sending commands to the utility meter. Thus, the first, the second and the third CMC together with the CMCL has the effect that the change of mandate may be removed from one gateway and given to another gateway in a simple and efficient way ensuring that a situation where two gateways continuously attempt to manage the utility meter is prevented. Further, the invention is advantageous when multiple mandates are removed from and reassigned to a plurality of gateways in a bulk-operation, whereby the mandate of managing a utility meter may temporarily be assigned to more than one gateway.

The gateway may be data collector or concentrator of an advanced metering infrastructure, preferably using a Radio Frequency (RF) based wireless LPWAN for communication with the utility meters. Preferably the gateway is arranged for autonomously collection of data from the utility meters and autonomously management of the utility meters such as link management or management of time services or other network services in the utility meter.

The utility meter may be a water meter, a gas meter, an electricity meter, a thermal energy meter, a heat cost allocator or any other consumption meter arranged for measuring an amount of a consumed utility at a consumption site. Preferably the utility meter is a battery-operated utility meter.

Preferably, the method according to the first aspect of the invention is a method for controlling wireless transmission of a command from a gateway to a utility meter in a wireless network using Listening After Talk (LAT). Especially the utility meter of the method according to the first aspect of the invention may comprise a wireless communication interface for receiving data messages comprising a command and for opening a reception window after transmission of a data message from the utility meter. Thus, the wireless communication interface of the utility meter and the gateway may be arranged for wireless communication using a Listen After Talk protocol (LAT). Optionally the method according to the first aspect of the invention comprises a step of transmitting from the utility meter to the gateway a data message whereafter a listening window is opened and a step of transmitting by the gateway the generated data message from the gateway to the utility meter within the listening window opened by the utility meter. The data message transmitted from the utility meter may be an unsolicited message. The method may comprise a step of transmitting, by the utility meter, an unsolicited message from the utility meter to the gateway with regular or irregular intervals.

A data message shall be understood to be a data packet, or a frame transmitted wirelessly via RF between the gateway and the utility meter or in the opposite direction. The data message may comprise one or more of the following elements: a preamble, a synchronization word or synchronization sequence, a MAC header, a link layer header, a network layer header, a transport layer header, an application layer header, a security header, an authentication header, integrity check values, message authentication codes and other relevant headers. Each of the headers may be followed by or include data or information in the form of control bytes or general payload. The command may be carried in any part of the data message. The command may include parameters or data included in the payload or in a header.

The meter ID is understood to be any identification used for identifying the utility meter in connection with the transmission of a command or data to or from the utility meter. Preferably, the meter ID is an identifier uniquely identifying the utility meter at least within the scope of the network.

The utility meter receives the data message transmitted from the gateway to the utility meter and parses the message to interpret the information carried in the data message. Parsing the data message is different from execution of the command carried in the data message. Parsing the data message includes determining the value of the third CMC and determining the command carried by the data message. The command or data message may optionally carry additional information in a header or in payload, such as information about a desired frequency, data rate, transmission power coding rate etc. Such additional information may also be parsed. Execution of the command is understood to be the effectuation of the command e.g. to start using the desired frequency, data rate, transmission power coding rate etc. Execution of the command may include execution, by the processor, of instructions stored in a memory of the utility meter and optionally applying additional information carried by the command or data message. The command shall not be understood as codes for direct execution in a micro controller or as SW or SW update code. The command may be an ID identifying an action to be executed by the utility meter.

Allowing execution is to accept or schedule the command for execution or simply executing the command whereas refrain from allowing execution is to be understood as preventing, forbidding, abstaining from execution of the command or simply as not executing the command. In other words, if the value of the third CMC exceeds the value of the first CMC, executing by the utility meter the command comprised in the received data message and set the value of the first CMC to be equal to the value of the third CMC, if the value of the third CMC does not exceed the value of the first CMC, not executing the command comprised in the received data message.

Comparing, in the utility meter, the third CMC in the received data message to the first CMC of the utility meter may include comparing the numerical values of the CMCs, consequently, to determine if the third CMC in the received data message exceeds the first CMC of the utility meter may include interpreting the first CMC as a limit which may be exceeded by the third CMC.

Thus in other words the method may include a step of validating in the utility meter that the third CMC in the received data message exceeds the first CMC of the utility meter, if said validation is positive allow execution of the command comprised in the received data message and set the value of the first CMC to be equal to the value of the third CMC, if said validation is negative refrain from allowing execution of the command comprised in the received data message.

Optionally, the offset for calculating the value of the third CMC is a positive integer or a negative integer. It is to be understood that exceeding the first CMC or reaching the CMCL may be realised by incrementing/increasing as well as by decrementing/decreasing the second / third CMC.

The method according to the first aspect of the invention may further comprise a step of sending from the utility meter a second data message comprising the value of the first CMC, wherein the second data message is a reply in response to the received data message or wherein the second data message is an unsolicited data message. The second data message in the form of an unsolicited data message may be transmitted autonomously by the utility meter with regular or irregular intervals. After the transmission of the second data message the utility meter optionally opens a listening window using the LAT approach. Transmission of the first CMC in the data message has the effect of synchronizing the first and second CMC values across the utility meter and the gateways. Further, the second data message comprising the first CMC has the advantage that the received CMC may be used by a new gateway which has been delegated a mandate to manage the utility meter to know the optimal value to be used for the third CMC. Further, transmission of the first CMC has the effect that a gateway may detect that the first CMC exceeds the CMCL that the gateway has for that meter and thereby determine that it no longer has a mandate to manage the utility meter whereby it will stop transmitting data messages to the utility meter in the listening windows and potential destructive collisions are avoided. Thus, the technical effect is an indirect communication from the network controller to the gateway to stop managing the utility meter whereby an effective and reliable transfer of responsibility is effectuated without jeopardizing the stability of the network.

Optionally, the method according to the first aspect of the invention may comprise a step of receiving by the gateway the second data message and setting the value of the second CMC equal to the received value of the first CMC. This has the effect of efficiently stopping a gateway from trying to manage a utility meter that the gateway no longer has a mandate to manage or is responsible for managing.

Optionally, the method may further comprise a step of transmitting from the gateway to a network controller the received value of the first CMC and/or the value of the second CMC. This has the advantage that the network controller may transfer the value of the first or second CMC to a new gateway or use the value of the first or second CMC for calculating a new CMCL and/or new second CMC to be transferred back to the gateway or to a new gateway, whereby an effective transfer of responsibility / mandate may be made.

Optionally, the method according to the first aspect of the invention may further comprise a step of with regular or irregular intervals transmitting from a network controller to the gateway a new CMCL and/or a new CMC and setting the CMCL of the gateway equal to said new CMCL and/or setting the second CMC of the gateway equal to said new CMC. This has the advantage of delegating to the gateway a limited mandate for transmitting commands to the utility meter / link management and of maintaining the delegated mandate. In an alternative to transmitting a new CMCL to a gateway, an offset to be added to the existing CMCL may be transmitted to the gateway from the network controller.

Optionally, the method according to the first aspect of the invention may comprise a step of with regular or irregular intervals in the gateway and/or in a network controller initiating the establishment of a communication session between the gateway and a network controller and if said communication session is successfully established set the value of the CMCL to a new value being one of the following: the existing CMCL plus a value determined by the network controller or the gateway or the second CMC plus a value determined by the network controller or the gateway or the first CMC plus a value determined by the network controller or the gateway. This has the advantage that as long as a working connection between gateway and network controller can be established, the mandate delegated to the gateway will be renewed, however, if a connection between network controller and gateway cannot be established then the mandate will lapse after a number of commands has been transmitted to the utility meter. This ensures that a gateway to which connection has been lost will not continuously manage a meter in an undesired way. Further, this is advantageously because the mandate to manage the utility meter is not withdrawn immediately if the connection is lost between gateway and network controller. Thereby the gateway may continue managing the utility meter for a while until the responsibility is delegated to a new gateway, whereby the robustness of the network is improved.

Optionally, the command may be a link management command for setting a communication parameter in the utility meter such as a transmission power or a communication channel or a coding rate or a data rate alternatively the command is a network service command for maintenance of the network such as for setting or adjusting a clock or a time in the utility meter. It is understood by the skilled person that the method is especially advantageous for link management and transmission of network service commands.

Optionally, the CMCL is associated with the utility meter ID of the utility meter. This has the advantage that the mandate for managing a utility meter may be delegated individually for a plurality of utility meters to a plurality of gateways. It is understood by the skilled person that the method according to the first aspect of the invention may be applied to a plurality of utility meters.

Optionally, the gateway and the utility meter may each comprise an encryption key and the data messages sent by the gateway and/or the utility meter are protected by the encryption key by use of cryptographic methods. Further the method may include updating the encryption key in the utility meter and the gateway and at the same time resetting or setting a new value of the first and the second CMC. Hereby the CMC may be restarted in a secure way. The cryptographic methods may be one or more of encryption, authentication or authenticated encryption. The encryption key in the gateway may be associated with one or more of the utility meter ID of the utility meter, the second CMC or the CMCL. Optionally the gateway receives the encryption key from a network controller.

In a second aspect of the invention is provided a system for wireless transmission of commands from a gateway to a utility meter, wherein the system comprises a utility meter and a gateway, wherein the utility meter comprises: a wireless communication interface; a processor for executing commands received via the wireless communication interface; a first Command Message Counter, CMC, and a utility meter ID, and the gateway comprises: a wireless communication interface; a processor for generating data messages comprising commands; a second CMC associated with the utility meter ID of the utility meter; and a Command Message Counter Limit, CMCL, wherein the gateway is arranged to: determine if the second CMC associated with the utility meter ID of the utility meter has reached the CMCL, if said second CMC has reached the CMCL refrain from transmitting the command to the utility meter else if said second CMC has not reached the CMCL the gateway is further arranged to: generate a data message comprising the command, the utility meter ID of the utility meter and a third CMC, where the third CMC is assigned a value calculated as the value of the second CMC associated with said utility meter ID plus an offset; transmit the generated data message from the gateway to the utility meter; and to update the value of the second CMC according to the value of the third CMC; and wherein the utility meter is arranged to: receive the data message transmitted from the gateway; and to compare the third CMC in the received data message to the first CMC of the utility meter, if the value of the third CMC exceeds the value of first CMC allow execution of the command comprised in the received data message and set the value of the first CMC to be equal to the value of the third CMC, if the value of the third CMC does not exceed the value of the first CMC refrain from allowing execution of the command comprised in the received data message.

The system according to the second aspect of the invention has the same advantageous as the method according to the first aspect of the invention. Further, all optional and alternative elements of the first aspect of the invention may also be combined with the second aspect of the invention and may provide the same advantages as mentioned with respect to the first aspect.

It is understood by the skilled person that the system according to the second aspect of the invention comprises at least one gateway but may comprise a plurality of gateways and at least one utility meter but may comprise a plurality of utility meters.

The utility meter of the system may be a water meter, a gas meter, a thermal energy meter, a heat cost allocator or any other consumption meter arranged for measuring an amount of a consumed utility at a consumer. Preferably the utility meter is a battery-operated utility meter.

Optionally said offset is a positive integer or a negative integer.

Optionally the utility meter is further arranged to send a second data message comprising the value of the first CMC, as a reply in response to the received data message or as an unsolicited data message.

The system according to the second aspect of the invention may further include a network controller arranged to communicate with the gateway via a communication interface or communication network such as via the internet or via a cellular communication interface or a Wide Area Network (WAN).

Optionally the gateway is further arranged to receive the second data message and to set the value of the second CMC equal to the received value of the first CMC.

The gateway may further be arranged to transmit the received value of the first CMC to a network controller. Further, the gateway may be arranged to transmit the value of the second CMC to the network controller.

Optionally the network controller may be arranged to, with regular or irregular intervals, transmit to the gateway a new CMCL and the gateway may be arranged to set the CMCL equal to said new CMCL. Alternatively, or in addition there to the network controller may be arranged to, with regular or irregular intervals, transmit to the gateway a new CMC and the gateway may be arranged to set the second CMC equal to said new CMC.

Optionally the system according to the second aspect of the invention further comprises a network controller and the gate way and/or the network controller is arranged to, with regular or irregular intervals, initiate establishment of a communication session between the gateway and a network controller and if said communication session is successfully established to set the value of the CMCL to a new value being one of the following: the existing CMCL plus a value determined by the network controller or the gateway, or the second CMC plus a value determined by the network controller or the gateway, or the first CMC plus a value determined by the network controller or the gateway.

Optionally said command is a link management command for setting a communication parameter in the utility meter such as a transmission power or a communication channel or a coding rate or a data rate or wherein the command is a network service command for maintenance of the network such as for setting or adjusting a clock or a time in the utility meter.

Optionally the gateway is arranged to associate said CMCL with the utility meter ID of the utility meter.

Optionally the gateway and/or the utility meter further comprise an encryption key and the gateway and/or the utility meter is further arranged to protect the data messages sent by the gateway and/or the utility meter by the encryption key by use of cryptographic methods. Said cryptographic methods may be one or more of encryption, authentication or authenticated encryption. Further, the gateway may be arranged to associate the encryption key with one or more of the utility meter ID of the utility meter, the second CMC or the CMCL.

The individual aspects of the present invention may each be combined with any of the other aspects. These and other aspects of the invention will be apparent from the following description with reference to the described embodiments.

### BRIEF DESCRIPTION OF THE FIGURES

The method and the system according to the first and the second aspect the invention will now be described in more detail with regard to the accompanying figures. The figures show one way of implementing the present invention and is not to be construed as being limiting to other possible embodiments falling within the scope of the attached claim set.
Figure 1 illustrates an example of a meter reading system including gateways, meters and a network controller;
Figure 2 illustrates a gateway and a utility meter with Command message counter (CMC), Command Message Counter Limit (CMCL) and meter ID;
Figure 3 illustrates an example of a method for controlling transmission of commands form a gateway to a utility meter.

### DETAILED DESCRIPTION OF AN EMBODIMENT

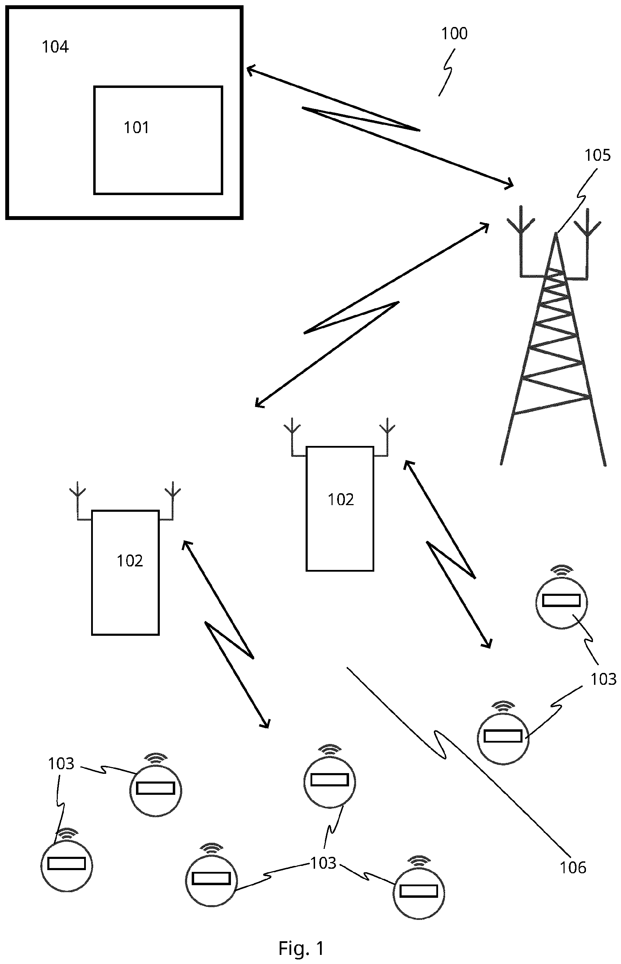

Fig.1 illustrates a wireless meter reading system 100 for remote reading and management of utility meters 103. The meter reading system comprises a network controller 101, a gateway 102, utility meters 103, a Head End System (HES) 104 and a cellular base station 105. The utility meters 103 are installed at consumption sites and are remotely read by the gateways 102. Wireless communication interfaces for Radio Frequency (RF) communication in the gateways 102 and the utility meters 103 together establish a wireless Low Power Wide Area Network (LPWAN) 106. The gateways communicate with the HES 104 via a backhaul in the form of a public cellular network comprising one or more cellular base stations 105. The HES 104 may comprise a plurality of subsystems for handling meter data, controlling and maintaining the utility meters and the meter reading system including a network controller 101 for controlling the LPWAN 106.

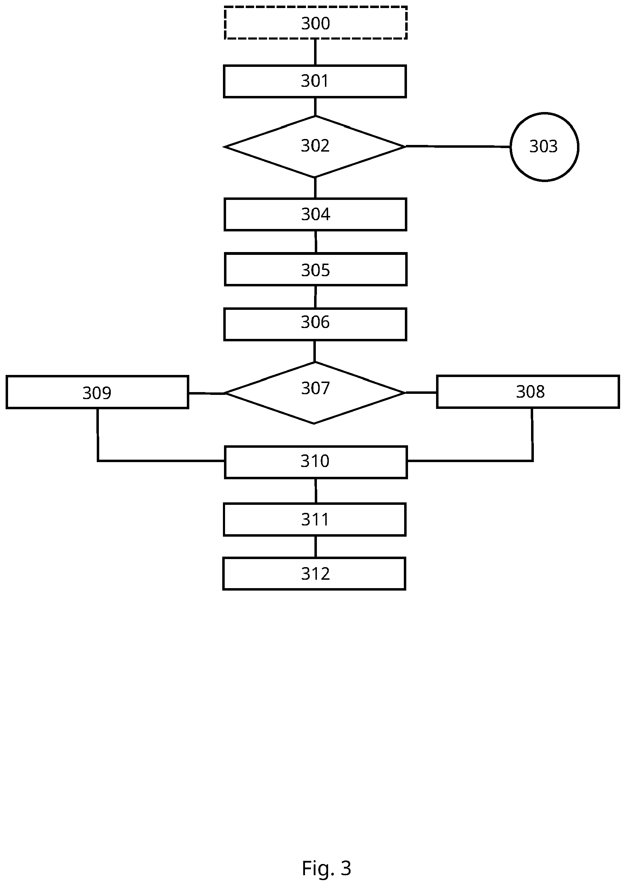

As can be seen from fig. 1 the gateways 102 may be within communication range of a plurality of utility meters 103 and the utility meters may be within communication range of more than one gateway 102, consequently multiple RF links of different quality may be created between a utility meter 103 and different gateways 102. The LPWAN 106 created by gateways 102 and utility meters 103 needs to be managed to maintain an efficient and optimized LPWAN over time where each RF link is carefully selected and optimized. This is the responsibility of the network controller 101, however, to achieve the most efficient and responsive adaption to changes in the RF links between the utility meters 103 and the gateways 102, it is beneficial if the network controller 101 delegates some of this responsibility to the gateways 102. Based on such a delegation of responsibility the gateways 102 will be able to autonomously manage the RF link between the gateway 102 and the utility meter 103 whereby the performance of the LPWAN is optimized. This will still be the case even if the connection to the network controller 101 via the backhaul is lost. However, an unlimited delegation of responsibility to the gateways 102 would be detrimental to the longtime stability of the LPWAN 106. This is mitigated by the method, see fig. 3, described in the following with reference to the system of fig. 1 and the elements of the meter reading system 100.

The utility meters 103, also known as a consumption meters, may be a water meter, a gas meter, a thermal energy meter, a heat cost allocator an electricity meter or any other consumption meter, preferably a battery-operated consumption meter. The consumption meter 103 comprises a wireless communication interface in the form of a bi-directional Radio Frequency (RF) communication interface. The communication interface connects the utility meter to the LPWAN 106. The RF communication interface is arranged for communication via an RF link using different communication parameters such as frequency, data rate, modulation, line coding, redundancy / Forward Error Correction (FEC), transmission power etc. The communication parameters are optimized to establish an RF communication link between the utility meter 103 and the gateway 102 with a sufficient stability, while at the same time conserving battery power in the utility meter and avoiding congestion in the RF channel by minimizing transmission time and transmission power. The utility meter 103 is arranged to receive data messages via the wireless communication interface. The data messages may carry various content in a payload or in headers, the content may be data such as consumption data, parameters for configuration of the utility meter 103, SW for updating the SW of the utility meter 103, commands or other types of data. Commands are requests or instructions for the utility meter 103 to perform a special task or to change behaviour in some way. A special set of commands are link management commands which are designed to make changes to e.g. communication parameters which influence the RF communication link between the utility meter 103 and the gateway 102. A processor in the utility meter 103 controls the wireless communication interface and is responsible for executing the commands requested via the wireless communication interface. The data messages are preferably protected by security mechanisms such as encryption and authentication based on one or more encryption keys EK stored in a memory of the utility meter 103. The commands are protected by the beforementioned security mechanisms. Further the utility meter 103 is arranged to keep a track on commands received via the communication interface. This is done by a (first) Command Message Counter (CMC) which is implemented in a memory of the utility meter. The CMC is updated for each data message comprising a command which is received by the utility meter 103. The data messages carrying a command must also include a (third) CMC. The utility meter 103 is arranged to compare the CMC of a received data message to the CMC of the utility meter. If the received CMC does not exceed i.e. is higher than the CMC of the utility meter, then the command carried by that data message will not be executed. On the contrary if the CMC carried by the received data message exceeds i.e. is lager than the CMC of the utility meter 103 then the command carried by the data message is eligible for execution. The utility meter 103 will execute the command provided that no other checks of the data message or command fails. Such checks include security checks, authentication, parameter checks of the command etc. Execution of the command may take place immediately or be scheduled for execution at a later time or event. Furter, the utility meter is arranged to update the (first) CMC according to a the (third) CMC included in the data message carrying the command. The (first) CMC in the utility meter may be updated by setting the value of the (first) CMC equal to the value of the (third) CMC if the value of the (third) CMC exceeds the value of the (first) CMC.

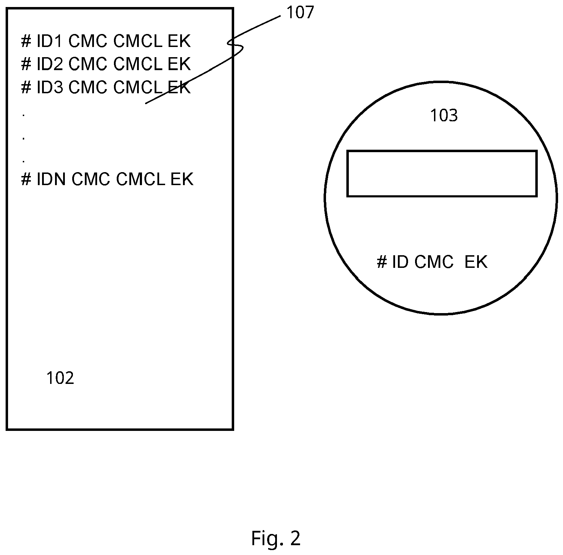

The gateway 102 comprises a wireless communication interface in the form of a bi-directional Radio Frequency (RF) communication interface. The communication interface connects the gateway 102 to the LPWAN 106. The RF communication interface is arranged for communication via an RF link using different communication parameters such as frequency, data rate, modulation, line coding, redundancy / Forward Error Correction (FEC), transmission power etc. The communication parameters are optimized to establish a stable and reliable RF communication link between the gateway 102 and the utility meter 103, while at the same time observing any duty cycle constraints applicable for the used frequency bands. Further, the gateway 102 comprises a second communication interface for communication with a network controller 101 via a backhaul network, such as the internet. The second communication interface may be a wireless communication interface such as cellular communication interface for public cellular communication such as 3G, 4G, 5G or 6G communication. Alternatively, the second communication interface may be a wired communication interface such as a digital subscriber line, ethernet or any other suitable wired communication interface. The gateway 102 is arranged to generate and transmit data messages via the wireless communication interface to the utility meters 103 and to receive data messages sent from the utility meters. Hereby the LPWAN 106 between the utility meters 103 and the gateways 102 is created. The data messages may carry various content in a payload or in headers of the data message. The content may be data such as consumption data, alarms, parameters for configuration of the utility meter 103, code for updating the SW of the utility meter 103, commands or other types of data. Further the gateway 102 is arranged for receiving data messages, data or commands from the Head End System (HES) 104 to be transmitted to the utility meters via the LPWAN 106. Such data messages, data or commands received from the HES may be end to end encrypted. Especially the gateway 102 is arranged to generate and transmit link management commands to the utility meters 103. By transmission of the link management commands to the utility meters 103 the gateway 102 may make changes to the communication parameters used by the utility meters 103 whereby the RF communication link between the utility meters 103 and the gateway 102 may be optimised. The data messages may at least partly be protected by security mechanisms such as encryption and authentication based on one or more encryption keys EK stored in a memory of the gateway 102. The commands are also protected by the beforementioned security mechanisms. The gateway 102 is arranged to manage one or more utility meters 103. Especially the gateway is arranged for link management of the wireless RF link between the utility meter and the gateway. The gateway may receive instructions from the network controller 101 to manage one or more specific utility meters 103. The gateway 102 comprises a responsibility list 107 of utility meters which it has been assigned a responsibility to manage. The responsibility list 107 comprises meter ID, a (second) CMC and a Command Message Counter Limit (CMCL) for each utility meter on the responsibility list, see fig. 2. The responsibility list may also include other utility meter individual information such as encryption keys EK, communication parameters etc. The responsibility list 107 is stored in a memory of the gateway. When generating a data message comprising a command, such as a link management command, to be transmitted to the utility meter 103 the gateway will check if the (second) CMC of the gateway 102 has reached the CMCL. If the CMCL has been reached the gateway 102 will not transmit the data message to the utility meter 103. If the CMCL has not been reached the data message will be transmitted and the CMC will be incremented / an offset will be added to the CMC and the new value will be stored in the memory of the gateway. The CMC will be included in the data message. The gateway is also arranged to receive and store new values for the CMC via data messages transmitted from the utility meter or from the network controller. Further, the gateway is arranged for receiving and storing a new value for the CMCL form the network controller.

The Low Power Wide Area Network (LPWAN) 106 is a wireless network. It is arranged to communicate according to a communication protocol such as wireless MBus, OMS LPWAN, LoRa or another standardized or proprietary communication protocol suitable for reading of utility meters especially suitable for reading of battery-operated utility meters. The LPWAN 106 establishes the link between the utility meter 103 and the gateway 102. The LPWAN 106 has the topology of a star network, characterized by direct communication between gateways 102 and utility meters 103 without intermediate routers.

The network controller 101 is arranged for controlling the LPWAN. The network controller 101 is arranged for delegating a limited mandate for e.g. link management of the link between a gateway 102 and a utility meter 103 to the gateway. This is done by sending a Command Message Counter Limit (CMCL) to the gate way and optionally also a CMC. The CMCL limits the number of data messages comprising commands that the gateway 102 can transmit to the utility meter 103 to the difference between the CMC and the CMCL. The network controller 101 is arranged to communicate with the gateway 102 with intervals to retrieve consumption data collected by the gateway but also to send an updated CMCL to the gateway whereby the mandate for managing the utility meter 103 is extended. The network controller 101 is also arranged to delegate the responsibility to manage the utility meter 103 to a second gateway 102 e.g. if connection is lost to the first gateway 102 or if the second gateway is better suited to manage the utility meter. This is done by sending a new CMC and a CMCL to the new gateway 102 where the new CMC and CMCL exceeds the CMCL sent to the first gateway 102. When the second gateway 102 sends a data message comprising a command to the utility meter 103 for the first time it will use the new CMC as a third CMC, which then will be stored in the utility meter as the first CMC, whereafter the first gateway will no longer be allowed to perform link management of the utility meter. The network controller may be a separate server or cloud solution or it may be an integrated part of a Head End System (HES) 104 or meter data management system.

Now referring to fig. 3 an embodiment of a method for controlling wireless transmission of a command from a gateway 102 to a utility meter 103 is described. In a first step 301 it is determined that a command is to be transmitted from the gateway 102 to the utility meter 103. This is typically determined in the gateway as an autonomous decision of the gateway 102. The gateway will fetch the utility meter ID and the corresponding second CMC and CMCL from an internal memory of the gateway.

In a next step 302 the gateway 102 will compare the second CMC to the CMCL. In case the second CMC has reached the CMCL the gateway will abstain from sending a command to the utility meter 303. However, if the second CMC has not reached the CMCL the gateway will continue to the following step 304.

In step 304 the gateway 102 will generate a data message to be transmitted to the utility meter 103. The data message comprises a command e.g. a command for link management. The data message further comprises a third CMC which is equal to the second CMC plus an offset. The offset may be set to 1 or another integer. The gateway 102 will apply any security mechanisms to the data message as required by the communication protocol used. Further, the gateway will update the second CMC to be equal to the third CMC.

In step 305 the gateway 102 will use the wireless communication interface for transmitting the data message to the utility meter 103 according to the communication protocol. The data message is transmitted via the LPWAN 160.

In step 306 the utility meter 103 will receive the data message and parse the content of the data message do determine the command and the third CMC
In step 307 the utility meter 103 will check if the received third CMC exceeds the value of the fist CMC stored in a memory of the utility meter. If the received third CMC exceeds the value of the fist CMC, the utility meter will proceed to step 308 otherwise it will proceed to step 309.

Step 306 or 307 optionally includes decoding, decryption, authentication etc. as defined by the communication protocol.

In step 308 the utility meter 103 will allow the execution of the command carried by the data message. The skilled person will understand that the execution of the command may be on the condition that other checks are passed such as security check or parameter checks of any parameters associated with the command. Further the utility meter will assign the value of the third CMC to the first CMC.

In step 309 the utility meter will not allow execution of the command. This means that the command may be discarded or in any other way prevented from being executed by the utility meter 103.

After step 308 and/or step 309 an optional step 310 may be performed wherein the utility meter 103 transmits a second data message to the gateway including the value of the first CMC. The second data message may be sent as a reply to the data message sent from the gateway 102 to the utility meter 102. Alternatively, the second data message is sent as an unsolicited message from the utility meter 103 to the gateway 102 and it may additionally comprise a payload in the form of consumption data.

In an optional step 311 the gateway 102 receives the second data message and stores the received CMC value in the second CMC corresponding to the utility meter ID. The gateway will now use the new CMC for the next communication, provided that it does not exceed the CMCL. Hereby the gateway 102 and the utility meter 103 are synchronized. Further, if the mandate to manage the utility meter 103 has been delegated to a new gateway 102 by the network controller 101 and the new gateway has communicated with the utility meter using a CMC higher that the CMCL of the old gateway 102, the old gateway will stop managing the meter and collision of communications are avoided. The old gateway will stop managing the meter either because it has overheard the communication between the new gateway and the utility meter or because it has itself received a second data message from the utility meter whereby it has detected that the first CMC of the utility meter 103 is higher than the CMCL of the old gateway 102.

In an additional step 312 the gateway 102 will forward the received CMC to the network controller 101. Optionally the gateway will also forward the CMCL to the network controller. The network controller 101 may then use the received CMC to determine a new suitable CMC and CMCL if it decides to delegate the responsibility of managing the utility meter 103 to a new gateway 102.

In an optional step 300 the gateway 102 or the network controller 101 may with regular or irregular interval initiate an establishment of a communication session between the two. During the communication session the network controller will renew the mandate delegated to the gateway to manage the utility meter 103. This is done by transmitting an increased CMCL to the gateway or an offset to be added to the CMCL. Hereby the mandate for managing the utility meter will automatically lapse after a while in case the connection is lost between the network controller and the gateway.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### REFERENCES

- 100: Meter reading system
- 101: Network controller
- 102: Gateway
- 103: Utility meter
- 104: Head end system
- 105: Cellular base station
- 106: Low Power Wide Area Network (LPWAN)
- 107: Responsibility list
- 300- 312: Steps of a method

## Claims

1. A method for controlling wireless transmission of a command from a gateway (102) to a utility meter (103), wherein the utility meter (103) comprises:
- a wireless communication interface;
- a processor for executing commands received via the wireless communication interface;
- a first Command Message Counter, CMC, and
- a utility meter ID,
and wherein the gateway (102) comprises:
- a wireless communication interface;
- a processor for generating data messages comprising commands;
- a second CMC associated with the utility meter ID of the utility meter; and
- a Command Message Counter Limit, CMCL,
the method comprises a step of:
- determining in the gateway (102) if the second CMC associated with the utility meter ID of the utility meter (103) has reached the CMCL, and if said second CMC has reached the CMCL refrain from transmitting the command to the utility meter else if said second CMC has not reached the CMCL perform the steps of:
- generating in the gateway (102) a data message comprising the command, the utility meter ID of the utility meter and a third CMC, where the third CMC is assigned a value calculated as the value of the second CMC associated with the utility meter ID plus an offset;
- transmitting the generated data message from the gateway (102) to the utility meter; -
- updating in the gateway (102) the value of the second CMC according to the value of the third CMC;
- receiving in the utility meter (103) the data message transmitted from the gateway; and
- comparing in the utility meter (103) the third CMC in the received data message to the first CMC of the utility meter, and if the value of the third CMC exceeds the value of the first CMC allowing execution of the command comprised in the received data message and set the value of the first CMC to be equal to the value of the third CMC, else if the value of the third CMC does not exceed the value of the first CMC refraining from allowing execution of the command comprised in the received data message.

2. The method according to claim 1, wherein said offset is a positive integer or a negative integer.

3. The method according to any of the previous claims, further comprising a step of sending from the utility meter (103) a second data message comprising the value of the first CMC, wherein the second data message is a reply in response to the received data message or wherein the second data message is an unsolicited data message.

4. The method according to claim 3, further comprising a step of receiving by the gateway (102) the second data message and setting the value of the second CMC equal to the received value of the first CMC.

5. The method according to claim 3 or 4, further comprising a step of transmitting from the gateway (102) to a network controller (101) the received value of the first CMC.

6. The method according to any of the preceding claims, further comprising a step of transmitting from the gateway (102) to a network controller (101) the value of the second CMC.

7. The method according to any of the preceding claims, further comprising a step of with regular or irregular intervals transmitting from a network controller (101) to the gateway (102) a new CMCL and setting the CMCL of the gateway equal to said new CMCL and/or a new CMC and setting the second CMC of the gateway equal to said new CMC.

8. The method according to any of the preceding claims wherein the method comprises a step of with regular or irregular intervals in the gateway (102) or in a network controller (101) initiating the establishment of a communication session between the gateway and a network controller and if said communication session is successfully established setting the value of the CMCL to a new value being one of the following: the existing CMCL plus a value determined by the network controller or the gateway, or the second CMC plus a value determined by the network controller or the gateway, or the first CMC plus a value determined by the network controller or the gateway.

9. The method according to any of the preceding claims wherein the command is a link management command for setting a communication parameter in the utility meter such as a transmission power or a communication channel or a coding rate or a data rate or wherein the command is a network service command for maintenance of the network such as for setting or adjusting a clock or a time in the utility meter (103).

10. The method according to any of the preceding claims wherein the CMCL is associated with the utility meter ID of the utility meter.

11. The method according to any of the preceding claims wherein the gateway (102) and the utility meter (103) each comprise an encryption key (EK) and the data messages sent by the gateway and/or the utility meter are protected by the encryption key by use of cryptographic methods.

12. The method according to claim 11, wherein the cryptographic methods are one or more of encryption, authentication or authenticated encryption.

13. The method according to claim 11 or 12, wherein the encryption key (EK) in the gateway (102) is associated with one or more of the utility meter ID of the utility meter, the second CMC or the CMCL.

14. A system for wireless transmission of commands from a gateway (102) to a utility meter (103), wherein the system comprises a utility meter and a gateway, wherein
the utility meter (103) comprises:
- a wireless communication interface;
- a processor for executing commands received via the wireless communication interface;
- a first Command Message Counter, CMC, and
- a utility meter ID,
and the gateway (102) comprises:
- a wireless communication interface;
- a processor for generating data messages comprising commands;
- a second CMC associated with the utility meter ID of the utility meter (103); and
- a Command Message Counter Limit, CMCL,
wherein the gateway (102) is arranged to:
- determine if the second CMC associated with the utility meter ID of the utility meter (103) has reached the CMCL, if said second CMC has reached the CMCL refrain from transmitting the command to the utility meter else if said second CMC has not reached the CMCL the gateway (102) is further arranged to:
- generate a data message comprising the command, the utility meter ID of the utility meter and a third CMC, where the third CMC is assigned a value calculated as the value of the second CMC associated with said utility meter ID plus an offset;
- transmit the generated data message from the gateway (102) to the utility meter (103); and to
- update the value of the second CMC according to the value of the third CMC;
and wherein the utility meter (103) is arranged to:
- receive the data message transmitted from the gateway (102); and to
compare the third CMC in the received data message to the first CMC of the utility meter, if the value of the third CMC exceeds the value of first CMC allow execution of the command comprised in the received data message and set the value of the first CMC to be equal to the value of the third CMC, if the value of the third CMC does not exceed the value of the first CMC refrain from allowing execution of the command comprised in the received data message.

15. The system according to claim 14, wherein the system further comprises a network controller (101) and wherein the gate way (102) and/or the network controller (101) is arranged to, with regular or irregular intervals, initiate establishment of a communication session between the gateway (102) and a network controller (101) and if said communication session is successfully established to set the value of the CMCL to a new value being one of the following: the existing CMCL plus a value determined by the network controller or the gateway, or the second CMC plus a value determined by the network controller or the gateway, or the first CMC plus a value determined by the network controller or the gateway.
